# EUROPÄISCHE PATENTSCHRIFT

(11) **EP 4 433 338 B1**
(45) Veröffentlichungstag und Bekanntmachung des Hinweises auf die Patenterteilung: **01.04.2026**
(21) Anmeldenummer: 22818039.4
(22) Anmeldetag: 17.11.2022
(51) Int. Cl.: B60T 7/20, B60T 13/58, B60T 13/68, B60T 8/42

(54) **VORRICHTUNG ZUR ERZEUGUNG EINES FLUIDISCHEN BREMSSTEUERSIGNALS**
DEVICE FOR GENERATING A FLUIDIC BRAKING CONTROL SIGNAL
DISPOSITIF DE GÉNÉRATION D'UN SIGNAL DE COMMANDE DE FREINAGE FLUIDIQUE

(30) Priorität: 19.11.2021 DE 102021213039
(43) Veröffentlichungstag der Anmeldung: 25.09.2024
(73) Patentinhaber: KNORR-BREMSE Systeme für Nutzfahrzeuge GmbH, 80809 München (DE)
(72) Erfinder: GRIESSER, Fabian, 80803 München (DE)
(86) Internationale Anmeldenummer: PCT/EP2022/082227
(87) Internationale Veröffentlichungsnummer: WO 2023/089006

(56) Entgegenhaltungen:
- EP-A1- 2 570 314
- FR-A1- 2 126 396
- FR-A1- 2 153 352
- GB-A- 1 205 702

## Beschreibung

Die vorliegende Erfindung betrifft eine Vorrichtung zur Erzeugung eines fluidischen Bremssteuersignals für ein fluidisches Bremssystem eines ersten Fahrzeugs, ein Bremssystem mit einer solchen Vorrichtung, ein Fahrzeug sowie ein Verfahren.

Die aktuelle Entwicklung von Bremssystemen im Nutzfahrzeugbereich führt dazu, dass pneumatische Bremssysteme durch elektromechanische Bremssysteme abgelöst werden. Bei Fahrzeugen mit einem elektromechanischen Bremssystem besteht das Problem, dass dennoch ein Anhänger mit einem konventionellen, pneumatischen Bremssystem an das Nutzfahrzeug angekoppelt werden kann. Ein solcher Anhänger erhält üblicherweise ein pneumatisches Bremssteuersignal, das im Zugfahrzeug generiert wird, um das pneumatische Bremssystem des Anhängers zu aktivieren. Da bei einem Zugfahrzeug mit elektromechanischem Bremssystem keine Druckluft vorhanden ist, muss eine Möglichkeit geschaffen werden, ein pneumatisches Bremssteuersignal zu erzeugen und es dem pneumatischen Bremssystem des Anhängers zur Verfügung zu stellen.

Das der Erfindung zugrunde liegende Problem kann noch weiter formuliert werden, indem allgemein eine Möglichkeit geschaffen werden soll, ein Bremssteuersignal für ein fluidisches Bremssystem zu erzeugen. Dabei muss dieses Bremssystem nicht zwingend in einem Anhänger vorgesehen sein. Es ist auch denkbar, dass das Fahrzeug sowohl ein elektromechanisches als auch ein fluidisches Bremssystem aufweist.

Das Dokument EP 2 570 314 A1 offenbart ein Bremssystem für eine Zugmaschine, das eine Vorrichtung zur Erzeugung eines fluidischen Bremssteuersignals mit den Merkmalen gemäß dem Oberbegriff des Anspruchs 1 aufweist.

Unter dem Begriff "fluidisch" ist nachfolgend sowohl "pneumatisch" als auch "hydraulisch" zu verstehen.

Daher ist es Aufgabe der vorliegenden Erfindung, dieses Problem zu lösen.

Diese Aufgabe wird durch die Gegenstände der unabhängigen Ansprüche gelöst. Vorteilhafte Weiterbildungen sind Gegenstand der Unteransprüche. Erfindungsgemäß ist eine Vorrichtung zur Erzeugung eines fluidischen Bremssteuersignals für ein fluidisches Bremssystem eines ersten Fahrzeugs vorgesehen. Die Vorrichtung weist folgendes auf:
- einen Steuereingang, der zum Empfang eines Bremsanforderungssignals ausgebildet ist;
- eine Steuereinheit, die zur Verarbeitung des Bremsanforderungssignals ausgebildet ist;
- eine Druckquelle, die zur Bereitstellung eines Versorgungsdrucks ausgebildet ist;
- einen Auslassanschluss, der dazu ausgebildet ist, das fluidische Bremssteuersignal in das Bremssystem auszugeben; und
- eine Ventileinheit, die dazu ausgebildet ist, von der Steuereinheit entsprechend dem Bremsanforderungssignal angesteuert zu werden und entsprechend der Ansteuerung durch die Steuereinheit das fluidische Bremssteuersignal auf Basis des Versorgungsdrucks zu erzeugen und an den Auslassanschluss zu übertragen.

Die Druckquelle kann einen Anschluss umfassen, um Druck von einer externen Quelle, wie einem Druckspeicher, einem Verdichter oder einer Pumpe zu erhalten. Die Druckquelle kann jedoch auch einen Druckspeicher oder einen Druckerzeuger, wie einen Verdichter oder eine Pumpe, selbst umfassen. Die Druckquelle kann insbesondere dazu dienen, ein Fluid, das als Druckübertragungsmedium fungiert, bereitzustellen.

Die Steuereinheit kann elektrisch oder elektronisch ausgebildet sein, wobei sie in Leitungsverbindung mit dem Steuereingang steht. Der Steuereingang kann einen oder mehrere Anschlüsse umfassen, um das Bremsanforderungssignal zu empfangen. Insbesondere kann vorgesehen sein, dass einzelne Anschlüsse des Steuereingangs mit einzelnen Steuermitteln der Steuereinheit leitungsverbunden sind.

Es wird somit eine Vorrichtung zur Verfügung gestellt, die dazu ausgebildet ist, aus einem elektrischen oder elektronischen Bremsanforderungssignal ein fluidisches Bremssteuersignal zu erzeugen.

Erfindungsgemäß weist die Ventileinheit einen ersten Ventilsteuerkreis und einen zweiten Ventilsteuerkreis auf. Dabei ist die Vorrichtung dazu ausgebildet, das fluidische Bremssteuersignal direkt durch den ersten Ventilsteuerkreis und/oder den zweiten Ventilsteuerkreis zu erzeugen. Auf diese Weise ist eine einfache Bauart der Vorrichtung möglich, die keine weiteren Teile benötigt. Alternativ sind der erste Ventilsteuerkreis und der zweite Ventilsteuerkreis dazu ausgebildet, ein fluidisches Vorrichtungssteuersignal zu erzeugen, wobei die Vorrichtung, insbesondere die Ventileinheit, dazu ausgebildet ist, das fluidische Bremssteuersignal in Reaktion auf das fluidische Vorrichtungssteuersignal zu erzeugen. Das Vorrichtungssteuersignal kann beispielsweise von einem Relaisventil verarbeitet werden, um das fluidische Bremssteuersignal zu erzeugen.

Vorzugsweise weist die Ventileinheit ein druckbetätigtes Steuerventil auf, wenn der erste Ventilsteuerkreis und der zweite Ventilsteuerkreis dazu ausgebildet sind, ein fluidisches Vorrichtungssteuersignal zu erzeugen. Das druckbetätigte Steuerventil ist dann dazu ausgebildet, in Reaktion auf das fluidische Vorrichtungssteuersignal das fluidische Bremssteuersignal zu erzeugen. Gemäß einer bevorzugten Ausführungsform weist das druckbetätigte Steuerventil ein Relaisventil auf.

Vorzugsweise weist die Ventileinheit mindestens ein elektrisch betätigbares Ventil auf, das durch die Steuereinheit ansteuerbar vorgesehen ist. Insbesondere können/kann der erste und/oder der zweite Ventilsteuerkreis mindestens ein solches Ventil aufweisen. Diese können als federrückgestellte Magnetventile ausgebildet sein, die, wenn sie nicht durch die Steuereinheit betätigt werden, in eine Grundstellung zurückkehren, in der sie entweder geschlossen (normally-closed-valve) oder offen (normally-open-valve) sind.

Vorzugsweise ist die Ventileinheit dazu ausgebildet, das fluidische Bremssteuersignal so zu erzeugen, dass eine situationsabhängige Aktivierung des Bremssystems durch das fluidische Bremssteuersignal verursacht wird, insbesondere um das Fahrzeug im Fahrbetrieb abzubremsen. Dies entspricht insbesondere einem Betriebsbremsfall. Alternativ oder zusätzlich ist die Ventileinheit dazu ausgebildet, das fluidische Bremssteuersignal so zu erzeugen, dass eine dauerhafte Aktivierung des Bremssystems durch das fluidische Bremssteuersignal verursacht wird, insbesondere um das Fahrzeug im Stillstand zu halten. Dies entspricht insbesondere einem Parkbremsfall.

Für den Fall dass der erste Ventilsteuerkreis und der zweite Ventilsteuerkreis dazu ausgebildet sind, ein fluidisches Vorrichtungssteuersignal zu erzeugen, ist vorzugsweise folgendes vorgesehen: Vorzugsweise ist der erste Ventilsteuerkreis dazu ausgebildet, ein fluidisches Vorrichtungssteuersignal so zu erzeugen, dass eine situationsabhängige Aktivierung des Bremssystems durch das fluidische Bremssteuersignal verursacht wird, insbesondere um das Fahrzeug im Fahrbetrieb abzubremsen, insbesondere einem Betriebsbremsfall entsprechend. Alternativ oder zusätzlich ist der zweite Ventilsteuerkreis dazu ausgebildet, ein fluidisches Vorrichtungssteuersignal so zu erzeugen, dass eine dauerhafte Aktivierung des Bremssystems durch das fluidische Bremssteuersignal verursacht wird, insbesondere um das Fahrzeug im Stillstand zu halten, insbesondere einem Parkbremsfall entsprechend.

Vorzugsweise weist die Vorrichtung, insbesondere die Ventileinheit, ein Nachspeiseventil auf, das dazu ausgebildet ist, insbesondere bei dauerhafter Aktivierung des Bremssystems, Druck für das fluidische Bremssteuersignal nachzuspeisen. Wenn die Vorrichtung den ersten Ventilsteuerkreis und den zweiten Ventilsteuerkreis aufweist, ist das Nachspeiseventil vorzugsweise dazu ausgebildet, Druck für das Vorrichtungssteuersignal nachzuspeisen. Alternativ oder zusätzlich ist das Nachspeiseventil dazu ausgebildet, insbesondere bei keiner Aktivierung des Bremssystems, Druck für das fluidische Bremssteuersignal abzulassen. Wenn die Vorrichtung den ersten Ventilsteuerkreis und den zweiten Ventilsteuerkreis aufweist, ist das Nachspeiseventil vorzugsweise dazu ausgebildet, Druck für das Vorrichtungssteuersignal abzulassen. Nach einer bevorzugten Ausführungsform ist der zweite Ventilsteuerkreis zur dauerhaften Aktivierung des Bremssystems ausgebildet. D.h. die Nachspeisung erfolgt in diesem Fall über das Nachspeiseventil an den zweiten Ventilsteuerkreis. Zum Nachspeisen kann beispielsweise vorgesehen sein, dass über das Nachspeiseventil eine Verbindung von der Druckquelle zur Ventileinheit, insbesondere zum ersten und/oder zweiten Ventilsteuerkreis hergestellt wird. Vorzugsweise wird diese Verbindung durch das Steuerventil kontrolliert, das das fluidische Bremssteuersignal erzeugt. Zum Ablassen kann beispielsweise vorgesehen sein, dass über das Nachspeiseventil eine Verbindung von der Ventileinheit zur Atmosphäre, insbesondere vom ersten und/oder zweiten Ventilsteuerkreis zur Atmosphäre hergestellt wird. Vorzugsweise wird diese Verbindung durch das Steuerventil kontrolliert, das das fluidische Bremssteuersignal erzeugt. Dazu weist das Steuerventil vorzugsweise einen Entlüftungsanschluss auf.

Vorzugsweise weist die Steuereinheit ein erstes Steuermittel und ein zweites Steuermittel auf. Die Steuermittel sind vorzugsweise redundant ausgebildet. Insbesondere kann vorgesehen sein, dass das erste Steuermittel eine Steuerung eines Betriebsbremsfalls übernimmt und das zweite Steuermittel eine Steuerung eines Parkbremsfalls übernimmt, wobei, wenn das zweite Steuermittel defekt ist, oder allgemein eine Steuerung über das zweite Steuermittel nicht möglich ist, auch eine Steuerung eines Parkbremsfalls durch das erste Steuermittel möglich ist. Das erste und/oder zweite Steuermittel umfassen/umfasst vorzugsweise elektrische oder elektronische Steuermittel wie einen elektrischen Schalter, einen Transistor oder eine elektronisches Steuergerät.

Für den Fall, dass die Ventileinheit einen ersten Ventilsteuerkreis und einen zweiten Ventilsteuerkreis aufweist, ist vorzugsweise das erste Steuermittel zur Steuerung des ersten Ventilsteuerkreises ausgebildet und vorzugsweise das zweite Steuermittel zur Steuerung des zweiten Ventilsteuerkreises ausgebildet.

Vorzugsweise weist die Vorrichtung ein Verbindungsventil auf, das dazu ausgebildet ist, den ersten Ventilsteuerkreis und den zweiten Ventilsteuerkreis miteinander zu verbinden und voneinander zu trennen, wobei das Verbindungsventil vorzugsweise durch die Steuereinheit, besonders bevorzugt durch das erste Steuermittel, steuerbar ist. Auf diese Weise wird ermöglicht, Druck von einem Ventilsteuerkreis über das Verbindungsventil zum anderen Ventilsteuerkreis zu speisen oder Druck von einem Ventilsteuerkreis über das Verbindungsventil und durch den anderen Ventilsteuerkreis abzulassen. Vorzugsweise ist die Vorrichtung dazu ausgebildet, bei einer Verbindung des ersten Ventilsteuerkreises über das Verbindungsventil mit dem zweiten Ventilsteuerkreis eine Erzeugung des fluidischen Vorrichtungssteuersignals im ersten Ventilsteuerkreis durch den zweiten Ventilsteuerkreis und/oder eine Erzeugung des fluidischen Vorrichtungssteuersignals im zweiten Ventilsteuerkreis durch den ersten Ventilsteuerkreis durchzuführen. Somit ist eine redundante Erzeugung des fluidischen Vorrichtungssteuersignals möglich. Ist beispielsweise der erste Ventilsteuerkreis dazu vorgesehen, das fluidische Vorrichtungssteuersignal zur Durchführung einer Betriebsbremsung zu erzeugen, und ist gleichzeitig der zweite Ventilsteuerkreis dazu vorgesehen, das fluidische Vorrichtungssteuersignal zur Durchführung einer Parkbremsung zu erzeugen, so kann bei Ausfall der Steuermöglichkeit des zweiten Ventilsteuerkreises, beispielsweise dann wenn ein entsprechendes Steuermittel defekt ist, die Erzeugung des Vorrichtungssteuersignals durch den ersten Ventilsteuerkreis erfolgen, das über das Verbindungsventil in den zweiten Ventilsteuerkreis gespeist wird. Auf diese Weise kann eine Parkbremsfunktionalität auch mit dem ersten Ventilsteuerkreis umgesetzt werden, der eigentlich primär für die Realisierung der Betriebsbremsfunktionalität vorgesehen ist. Alternativ oder zusätzlich ist auch die umgekehrte Ausbildung der Vorrichtung denkbar, d.h. dass auch eine Erzeugung des fluidischen Vorrichtungssteuersignals durch den zweiten Ventilsteuerkreis möglich ist, das dann über das Verbindungsventil an den ersten Ventilsteuerkreis geschickt wird.

Vorzugsweise weist das Bremsanforderungssignal ausschließlich mindestens ein elektrisches oder elektronisches Signal auf. Alternativ oder zusätzlich weist die Vorrichtung als Steuereingang ausschließlich den Steuereingang, wie oben beschrieben auf. D.h. es werden keine weiteren Eingangssignale, insbesondere keine fluidischen Eingangssignale, benötigt, um das Bremssystem mittels der erfindungsgemäßen Vorrichtung anzusteuern.

Vorzugsweise ist die Vorrichtung modular ausgebildet. Alternativ oder zusätzlich weist die Vorrichtung ein Gehäuse oder ein Trägerelement auf, das als Elemente den Steuereingang, die Steuereinheit, die Druckquelle, den Auslassanschluss und die Ventileinheit aufweist. Ein Trägerelement unterscheidet sich von einem Gehäuse dadurch, dass zumindest eins der Elemente mit Ausnahme des Auslassanschlusses nicht gekapselt ist. Die modulare Ausbildung bringt den Vorteil mit sich, dass die Vorrichtung als Ganzes ein- und ausgebaut werden kann, so dass sich Montage und Wartung deutlich vereinfachen.

Vorzugsweise ist die Vorrichtung dazu ausgebildet, in oder an einem zweiten Fahrzeug angebracht zu werden, wobei das zweite Fahrzeug mit dem ersten Fahrzeug gekoppelt ist. Speziell ist das zweite Fahrzeug als Zugfahrzeug ausgebildet, das das erste Fahrzeug, das als Anhänger ausgebildet ist, zieht. Es kann aber auch vorgesehen sein, dass das Bremssystem, das mittels des fluidischen Bremssteuersignals von der Vorrichtung gesteuert wird, und die Vorrichtung auf demselben Fahrzeug vorgesehen sind.

Nachfolgend werden weitere erfindungsgemäße Gegenstände beschrieben. Merkmale dieser Gegenstände, die in der vorstehenden Beschreibung der Vorrichtung erwähnt wurden, sind als optionale Merkmale dieser Gegenstände zu verstehen.

Nach einem weiteren Aspekt der Erfindung ist ein Bremssystem für ein Fahrzeug vorgesehen, wobei das Bremssystem eine Vorrichtung wie oben beschrieben aufweist. Das Bremssystem weist vorzugsweise einen Teil auf, nicht fluidisch aktuiert ist. Insbesondere kann dieser Teil elektromechansich aktuiert sein. Ferner weist das Bremssystem einen fluidisch aktuierten Teil auf, wobei die Vorrichtung vorgesehen ist, ein Bremsanforderungssignal, insbesondere von dem Teil zu empfangen, der nicht fluidisch aktuiert ist, und ein fluidisches Bremssteuersignal an den fluidisch aktuierten Teil zu senden.

Nach einem weiteren Aspekt der Erfindung ist ein Fahrzeug vorgesehen, wobei das Fahrzeug eine Vorrichtung wie oben beschrieben oder ein Bremssystem wie oben beschrieben aufweist. Das Fahrzeug ist vorzugsweise elektrisch angetrieben und weist dazu insbesondere eine Kombination einer elektrischen Antriebsmaschine mit einem elektrischen Energiespeicher und/oder einer Brennstoffzelle auf. Das Fahrzeug kann aber auch hybridisch oder konventionell angetrieben sein. Ferner kann das Fahrzeug ein Zugfahrzeug, ein Nutzfahrzeug, eine Kombination aus Zugfahrzeug und Anhänger, ein Anhänger oder ein Bus sein.

Nach einem weiteren Aspekt der Erfindung ist ein Verfahren zur Erzeugung eines fluidischen Bremssteuersignals für ein fluidisches Bremssystem eines ersten Fahrzeugs mit folgenden Schritten vorgesehen:
- Empfangen eines Bremsanforderungssignals;
- Erzeugen eines fluidischen Bremssteuersignals in Reaktion auf das Bremsanforderungssignal aus einem Versorgungsdruck durch eine Ventileinheit; und
- Ausgeben des fluidischen Bremssteuersignals, wobei
zur Durchführung des Verfahrens eine Vorrichtung wie oben beschrieben verwendet wird.

Nachfolgend wird die Erfindung anhand bevorzugter Ausführungsbeispiele näher erläutert, wobei auf die beigefügten Zeichnungen verwiesen wird.

Es zeigen
- Fig. 1: eine erfindungsgemäße Vorrichtung nach einer ersten Ausführungsform,
- Fig. 2: eine erfindungsgemäße Vorrichtung nach einer zweiten Ausführungsform, und
- Fig. 3: eine erfindungsgemäße Vorrichtung nach einer dritten Ausführungsform.

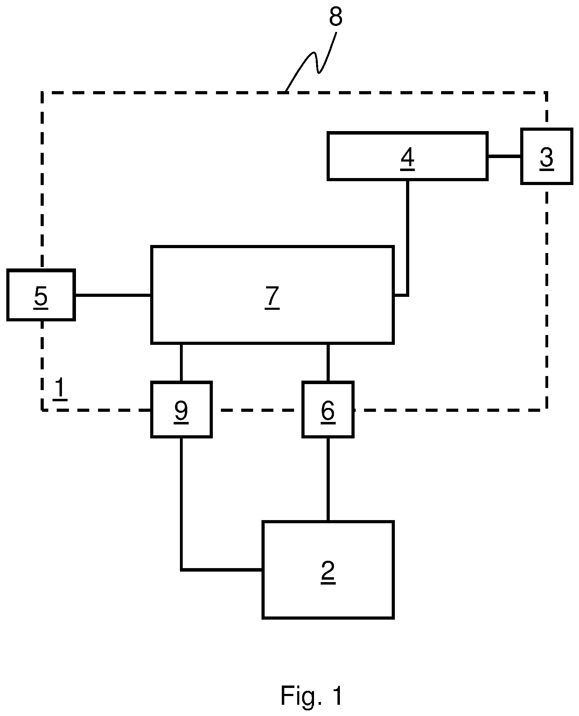

**Fig. 1** zeigt eine erfindungsgemäße Vorrichtung nach einer ersten Ausführungsform.

Es ist eine Vorrichtung 1 gezeigt, die einen Steuereingang 3, eine Steuereinheit 4, eine Druckquelle 5, einen Auslassanschluss 6 sowie eine Ventileinheit 7 aufweist. Die Vorrichtung 1 ist über den Auslassanschluss 6 mit einem Bremssystem 2 verbunden, das mittels einem fluidischen Bremssteuersignal gesteuert werden kann, das über den Auslassanschluss 6 an das Bremssystem 2 geschickt wird.

Über den Steuereingang 3 kann die Vorrichtung 1 ein Bremsanforderungssignal empfangen. Dieses kann beispielsweise von einem übergeordneten Steuergerät oder einem anderen Bremssystem, wie einem elektromechanischen Bremssystem, stammen. Das Bremsanforderungssignal gibt letztendlich einen Sollwert vor, der einem gewünschten Aktivierungsgrad des Bremssystems 2 entspricht, d.h. der z.B. eine Information über die zu erzeugende Bremswirkung durch das Bremssystem 2 enthält. Das Bremsanforderungssignal wird elektrisch oder elektronisch über den Steuereingang 3 empfangen und mittels der Vorrichtung 1 in das fluidische Bremssteuersignal umgewandelt, das über den Auslassanschluss 6 abgegeben wird.

Zur Umwandlung weist die Vorrichtung 1 die Steuereinheit 4 auf, die elektrische und/oder elektronische Steuermittel umfassen kann. Das Bremsanforderungssignal wird an die Steuereinheit 4 übermittelt, woraufhin die Steuereinheit 4 die Ventileinheit 7 ansteuert, um das fluidische Bremssteuersignal zu erzeugen. Die Ventileinheit 7 weist dafür entsprechende Ventile auf. Z.B. weist die Ventileinheit 7 Magnetventile auf, die durch die Steuereinheit 4 angesteuert werden.

Die Ventileinheit 7 ist mit der Druckquelle 5 verbunden, über die sie einen Versorgungsdruck erhält. Weiter ist die Ventileinheit 7 mit dem Auslassanschluss 6 verbunden, um das erzeugte fluidische Bremssteuersignal an das Bremssystem 2 zu übermitteln. Dabei ist die Ventileinheit 7 dazu ausgebildet, das fluidische Bremssteuersignal, das im Wesentlichen ein Drucksignal darstellt, aus dem Versorgungsdruck zu erzeugen.

Die Ventileinheit 7 ist dazu ausgebildet, das Bremssteuersignal zur Aktivierung des Bremssystems 2 während der Fahrt zu erzeugen, wobei die Ventileinheit 7 ferner dazu ausgebildet ist auch ein weiteres Bremssteuersignal zu erzeugen und zu halten, das das Bremssystem 2 dauerhaft aktiviert, wodurch beispielsweise das Fahrzeug im Stillstand gehalten werden kann.

Die Druckquelle 5 kann einen Anschluss umfassen, um Druck von einer externen Quelle zu erhalten. Die Druckquelle 5 kann jedoch auch einen Druckspeicher oder einen Druckerzeuger, wie einen Verdichter oder eine Pumpe, umfassen.

Optional ist vorgesehen, dass die Vorrichtung ein Gehäuse 8 aufweist, das die zuvor beschriebenen Elemente aufweist.

Optional kann weiter vorgesehen sein, dass die Vorrichtung 1 einen Versorgungsanschluss 9 aufweist, der dazu ausgebildet ist, Versorgungsdruck von der Druckquelle 5 an das Bremssystem 2 zur Verfügung zu stellen. Dieser Versorgungsanschluss 9 ist, wie in der Zeichnung dargestellt, über die zwischengeschaltete Ventileinheit 7 mit der Druckquelle 5 verbunden, so dass eine Steuerung der Verbindung von Druckquelle 5 zum Versorgungsanschluss 9 durch die Ventileinheit 7 steuerbar ist. Es ist jedoch auch möglich, dass eine direkte Verbindung zwischen der Druckquelle 5 und dem Versorgungsanschluss 9 vorgesehen ist, oder dass eine Verbindung über andere Zwischenelemente, wie z.B. andere Ventile, vorgesehen ist, die eine Steuerung dieser Verbindung ermöglichen.

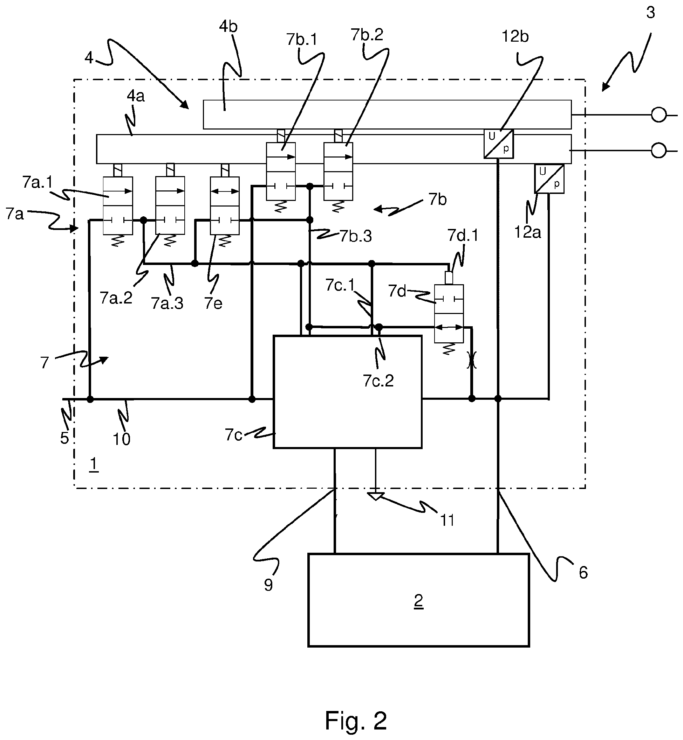

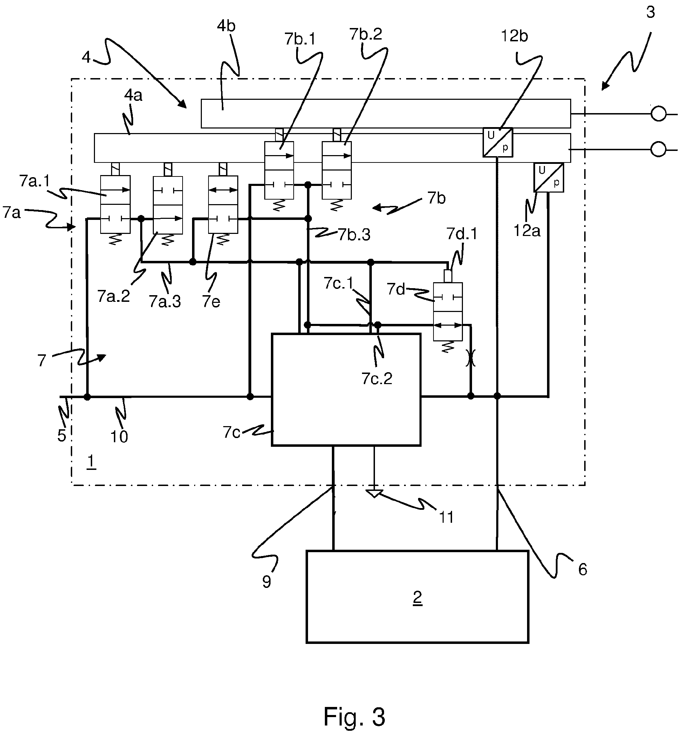

Die nachfolgenden Ausführungsformen gemäß der Figuren 2 und 3 stellen konkretere Ausführungsformen der allgemeinen Konfiguration der Erfindung dar, wie sie in Fig. 1 gezeigt ist.

**Fig. 2** zeigt eine erfindungsgemäße Vorrichtung nach einer zweiten Ausführungsform. Da es sich um eine konkretere Beschreibung einer Ausführungsform der Vorrichtung 1 aus Fig. 1 handelt, wird auch auf die Beschreibung zu Fig. 1 verwiesen, wobei die Beschreibung zu Fig. 2 hierzu ergänzend wirkt.

Der Steuereingang 3 ist hier mit einem ersten Steuermittel 4a und einem zweiten Steuermittel 4b der Steuereinheit 4 verbunden. Diese können elektronische oder elektrische Mittel aufweisen, beispielsweise einen elektrischen Schalter, einen Transistor oder ein elektronisches Steuergerät. In dem hier gezeigten Ausführungsbeispiel weist der Steuereingang 3 zwei separate Anschlüsse für die Steuermittel 4a, 4b auf. Es sind jedoch auch andere Ausführungsformen denkbar. Beispielsweise kann auch ein einzelner Anschluss vorgesehen sein, der mit beiden Steuermitteln 4a, 4b in Verbindung steht. Das erste Steuermittel 4a ist mit einem ersten Drucksensor 12a verbunden, über den das erste Steuermittel 4a eine Information über den Druck am Auslassanschluss 6 erhält. Das zweite Steuermittel 4b ist mit einem zweiten Drucksensor 12b verbunden, über den das zweite Steuermittel 4b eine Information über den Druck am Auslassanschluss 6 erhält. Alternativ kann auch vorgesehen sein, dass ein einziger Drucksensor vorgesehen ist, der eine Information über den Druck am Auslassanschluss 6 sowohl dem ersten Steuermittel 4a als auch dem zweiten Steuermittel 4b zur Verfügung stellt.

Die Ventileinrichtung 7 weist einen ersten Ventilsteuerkreis 7a auf. Dieser umfasst ein Einlassventil 7a.1 und ein Auslassventil 7a.2 sowie eine erste Ventilsteuerkreisleitung 7a.3. Der erste Ventilsteuerkreis 7a ist über eine Versorgungsleitung 10 mit der Druckquelle 5 verbunden, so dass Versorgungsdruck an den ersten Ventilsteuerkreis 7a gefördert werden kann. Das Einlassventil 7a.1 und das Auslassventil 7a.2 sind dazu ausgebildet, den Druck in der ersten Ventilsteuerkreisleitung 7a.3 einzustellen, wobei sie hierzu als Magnetventile ausgebildet sind, die durch das erste Steuermittel 4a der Steuereinheit 4 angesteuert werden.

Die Ventileinrichtung 7 weist einen zweiten Ventilsteuerkreis 7b auf. Dieser umfasst ein Einlassventil 7b.1 und ein Auslassventil 7b.2 sowie eine zweite Ventilsteuerkreisleitung 7b.3. Der zweite Ventilsteuerkreis 7b ist über die Versorgungsleitung 10 mit der Druckquelle 5 verbunden, so dass Versorgungsdruck an den zweiten Ventilsteuerkreis 7b gefördert werden kann. Das Einlassventil 7b.1 und das Auslassventil 7b.2 sind dazu ausgebildet, den Druck in der ersten Ventilsteuerkreisleitung 7b.3 einzustellen, wobei sie hierzu als Magnetventile ausgebildet sind, die durch das zweite Steuermittel 4b der Steuereinheit 4 angesteuert werden.

Die Ventileinheit 7 weist weiter ein Steuerventil 7c auf. Dieses ist über die Versorgungsleitung 10 mit der Druckquelle 5 verbunden, so dass das Steuerventil 7c mit Versorgungsdruck versorgt werden kann. Das Steuerventil 7c weist einen ersten Steuereingang 7c.1 und einen zweiten Steuereingang 7c.2 auf. Der erste Steuereingang 7c.1 ist mit der ersten Ventilsteuerkreisleitung 7a.3 und der zweite Steuereingang 7c.2 ist mit der zweiten Ventilsteuerkreisleitung 7b.3 verbunden, so dass jeder der Ventilsteuerkreise 7a, 7b ein fluidisches Vorrichtungssteuersignal an das Steuerventil 7c liefern kann. Das Steuerventil 7c ist dazu ausgebildet, in Reaktion auf ein fluidisches Steuersignal, das an den ersten Steuereingang 7c.1 oder an den zweiten Steuereingang 7c.2 gesendet wird, ein entsprechendes fluidisches Bremssteuersignal aus dem Versorgungsdruck zu erzeugen. Ferner ist das Steuerventil 7c mit einem Entlüftungsanschluss 11 verbunden.

Die beiden Ventilsteuerkreise 7a, 7b, genauer die erste Ventilsteuerkreisleitung 7a.3 und die zweite Ventilsteuerkreisleitung 7b.3, stehen in Verbindung mit einem Verbindungsventil 7e. Dieses weist ein Magnetventil auf, das durch das erste Steuermittel 4a angesteuert werden kann und worüber die erste Ventilsteuerkreisleitung 7a.3 und die zweite Ventilsteuerkreisleitung 7b.3 miteinander verbunden und voneinander getrennt werden können.

Schließlich weist die Ventileinrichtung 7 ein Nachspeiseventil 7d auf. Dieses ist als druckbetätigtes Ventil ausgebildet, wobei es einen Nachspeisesteuereingang 7d.1 aufweist, der mit der ersten Ventilsteuerkreisleitung 7a.3 verbunden ist, so dass das Nachspeiseventil 7d abhängig vom Druck in der Ventilsteuerkreisleitung 7a.3 steuerbar ist. Das Nachspeiseventil ist dazu ausgebildet, die zweite Ventilsteuerkreisleitung 7b.3 über das Steuerventil 7c mit der Druckquelle 5 zu verbinden, um Druck in die zweite Ventilsteuerkreisleitung 7b.3 nachzufördern, wenn dort aufgrund von Leckage ein Druckabfall auftritt, der dazu führen kann, dass sich das dauerhaft aktivierte Bremssystem 2 löst. Die Nachförderung erfolgt, wie in der Zeichnung dargestellt, über eine Drossel. Ferner ist vorgesehen, dass die Ventilsteuerkreisleitung 7b.3 über das das Nachspeiseventil 7d und das Steuerventil 7c über den Entlüftungsanschluss 11 mit der Atmosphäre verbunden wird, um eine ungewollte Befüllung der Ventilsteuerkreisleitung 7b.3, beispielsweise aufgrund von Leckage zu verhindern. Das Steuerventil 7c ist dabei dazu ausgebildet, je die Verbindung des Nachspeiseventils 7d mit der Druckquelle 5 oder der Atmosphäre selektiv vorzunehmen.

Die Funktionsweise der Vorrichtung 1 stellt sich wie folgt dar:
In der gezeigten Stellung sind die erste Ventilsteuerkreisleitung 7a.3 und die zweite Ventilsteuerkreisleitung 7b.3 drucklos. Die Einlassventile 7a.1, 7b.1 sperren den ersten Ventilsteuerkreis 7a bzw. den zweiten Ventilsteuerkreis 7b gegen die Versorgungsleitung 10 ab. Das Verbindungventil 7e ist geschlossen, so dass die erste Ventilsteuerkreisleitung 7a.3 und die zweite Ventilsteuerkreisleitung 7b.3 voneinander getrennt sind. Das Nachspeiseventil 7d ist in Durchlassstellung, d.h. es erlaubt eine Nachspeisung von Druck in die zweite Ventilsteuerkreisleitung 7b.3.

Befindet sich das Fahrzeug in einem Fahrzustand und soll gebremst werden, d.h., dass die Bremsen des Bremssystems 2 nicht dauerhaft aktiviert werden sollen, so erfolgt ein Ansteuern des ersten Ventilsteuerkreises 7a, indem das erste Steuermittel 4a entsprechend einem Bremsanforderungssignal, das über den Steuereingang 3 empfangen wurde, das Einlassventil 7a.1 des ersten Ventilsteuerkreises 7a ansteuert und dadurch eine Verbindung der Versorgungsleitung 10 mit der ersten Ventilsteuerkreisleitung 7a.3 herstellt. Dadurch steigt der Druck in der ersten Ventilsteuerkreisleitung 7a.3, der als Vorrichtungssteuersignal auf den ersten Steuereingang 7c.1 des Steuerventils 7c und auf den Nachspeisesteuereingang 7d.1 des Nachspeiseventils 7d wirkt. Dadurch reagiert das Steuerventil 7c und stellt einen entsprechenden Druck für den Auslassanschluss 6 bereit, den es aus dem Versorgungsdruck der Versorgungsleitung 10 generiert. Gleichzeitig wechselt das Nachspeiseventil 7d von seiner gezeigten ersten Schaltstellung in die zweite Schaltstellung, in der es die zweite Ventilsteuerkreisleitung 7b.3 von der Nachspeisung abtrennt, wodurch verhindert wird, dass eine entgegengesetzte Regelung durch die zweite Ventilsteuerkreisleitung 7b.3 einsetzt und so die Regelgüte des ersten Ventilsteuerkreises 7a und des ersten Steuermittels 4a herabsetzt. Somit kann das Bremssystem 2 durch das erste Steuermittel 4a und den ersten Ventilsteuerkreis 7a in einem Betriebsbremsfall gesteuert werden. Ein Lösen oder Reduzieren der Aktivierung des Bremssystems 2 kann über das Auslassventil 7a.2 des ersten Ventilsteuerkreises 7a erfolgen, indem die erste Steuereinheit 4a das Auslassventil 7a.2 von der gezeigten Schaltstellung in seine zweite Schaltstellung schaltet, in der es die erste Ventilsteuerkreisleitung 7a.3 mit der Atmosphäre verbindet und so die erste Ventilsteuerkreisleitung 7a.3 entlüftet.

Befindet sich das Fahrzeug beispielsweise im Stillstand und soll dauerhaft in diesem gehalten werden, indem die Bremsen des Bremssystems 2 dauerhaft aktiviert werden, so erfolgt ein Ansteuern des zweiten Ventilsteuerkreises 7b, indem das zweite Steuermittel 4b entsprechend einem Bremsanforderungssignal, das über den Steuereingang 3 empfangen wurde, das Einlassventil 7b.1 des zweiten Ventilsteuerkreises 7b ansteuert und dadurch eine Verbindung der Versorgungsleitung 10 mit der zweiten Ventilsteuerkreisleitung 7b.3 herstellt. Dadurch steigt der Druck in der zweiten Ventilsteuerkreisleitung 7b.3, der als Vorrichtungssteuersignal auf den zweiten Steuereingang 7c.2 des Steuerventils 7c wirkt. Dadurch reagiert das Steuerventil 7c und stellt einen entsprechenden Druck für den Auslassanschluss 6 bereit, den es aus dem Versorgungsdruck der Versorgungsleitung 10 generiert. Gleichzeitig verbleibt das Nachspeiseventil 7d in seiner gezeigten ersten Schaltstellung, in der es die zweite Ventilsteuerkreisleitung 7b.3 mit der Nachspeisung verbindet, wodurch eine Nachspeisung realisiert wird, die Leckagen in der zweiten Ventilsteuerkreisleitung 7b.3 kompensiert, so dass ein Lösen des dauerhaft aktivierten Bremssystems 2 verhindert wird. Somit kann das Bremssystem 2 durch das zweite Steuermittel 4b und den zweiten Ventilsteuerkreis 7b in einem Parkbremsfall gesteuert werden. Ein Lösen oder Reduzieren der Aktivierung des Bremssystems 2 kann über das Auslassventil 7b.2 des zweiten Ventilsteuerkreises 7b erfolgen, indem die zweite Steuereinheit 4b das Auslassventil 7b.2 von der gezeigten Schaltstellung in seine zweite Schaltstellung schaltet, in der es die zweite Ventilsteuerkreisleitung 7b.3 mit der Atmosphäre verbindet und so die zweite Ventilsteuerkreisleitung 7b.3 entlüftet.

Es ist somit, wie vorstehend beschrieben, möglich eine Betriebsbremsfunktion durch das erste Steuermittel 4a und eine Parkbremsfunktion durch das zweite Steuermittel 4b umzusetzen.

Darüber hinaus ist eine Redundanzfunktion gegeben, die einen Ausfall der Parkbremsfunktion durch einen Fehler des zweiten Steuermittels 4b und/oder des zweiten Ventilsteuerkreises 7b betrifft.

Für diesen Fall kann eine Verbindung der zweiten Ventilsteuerkreisleitung 7b.3 mit der ersten Ventilsteuerkreisleitung 7a.3 erreicht werden, indem das erste Steuermittel 4a das Verbindungsventil 7e von seiner gezeigten Schaltstellung in seine zweite Schaltstellung schaltet, in der es die erste Ventilsteuerkreisleitung 7a.3 und die zweite Ventilsteuerkreisleitung 7b.3 miteinander verbindet. Gleichzeitig wird das Einlassventil 7a.1 des ersten Ventilsteuerkreises 7a geöffnet, so dass Versorgungsdruck von der Versorgungsleitung 10 in die erste Ventilsteuerkreisleitung 7a.3 und über das Verbindungsventil 7e in die zweite Ventilsteuerkreisleitung 7b.3 gefördert wird. Dadurch wird ein Vorrichtungssteuersignal an den ersten Steuereingang 7c.1 und an den zweiten Steuereingang 7c.2 des Steuerventils 7c sowie an den Nachspeisesteuereingang 7d.1 des Nachspeiseventils 7d geschickt. Infolge dessen sperrt das Nachspeiseventil 7d die zweite Ventilsteuerkreisleitung 7b.3 von der Nachspeisung ab und erlaubt einen Druckaufbau in der zweiten Ventilsteuerkreisleitung 7b.3. Gleichzeitig stellt das Steuerventil 7c in Reaktion auf die Druckerhöhung an den Steuereingängen 7c.1 und 7c.2 das entsprechende fluidische Bremssteuersignal an den Auslassanschluss 6 bereit.

Um diesen Zustand dauerhaft zu halten und um insbesondere die Nachspeisung durch das Nachspeiseventil 7d wieder zu aktivieren, wird, sobald die gewünschte Aktivierung des Bremssystems 2 erreicht ist, wie folgt verfahren.

Das Verbindungsventil 7e wird wieder in seine in der Zeichnung gezeigte Schaltstellung zurückgeschaltet, in der es die erste Ventilsteuerkreisleitung 7a.3 von der zweiten Ventilsteuerkreisleitung 7b.3 trennt. Da das Einlassventil 7b.1 und das Auslassventil 7b.2 des zweiten Ventilsteuerkreises 7b nach wie vor geschlossen sind, bleibt der zuvor eingespeiste Druck in der zweiten Ventilsteuerkreisleitung 7b.3 erhalten und wirkt auf den zweiten Steuereingang 7c.2 des Steuerventils 7c, so dass das fluidische Bremssteuersignal dauerhaft durch das Steuerventil 7c erzeugt wird.

Um die Nachspeisung wieder zu aktivieren wird das Auslassventil 7a.2 des ersten Ventilsteuerkreises 7a geöffnet, d.h. es wird die erste Ventilsteuerkreisleitung 7a.3 an die Atmosphäre entlüftet. Dadurch wirkt auf den Nachspeisesteuereingang 7d.1 kein Druck mehr, so dass das Nachspeiseventil 7d in die in der Zeichnung gezeigte Schaltstellung zurückkehrt, in der es die zweite Ventilsteuerkreisleitung 7b.3 mit der Nachspeisung verbindet, wodurch Leckagen ausgeglichen werden.

Somit wird im Redundanzfall die zweite Ventilsteuerkreisleitung 7b.3 durch die erste Ventilsteuerkreisleitung 7a.3 über das Verbindungsventil 7e aufgefüllt, wobei anschließend der Druck in der zweiten Ventilsteuerkreisleitung 7b.3 gehalten wird, indem das Verbindungsventil 7e die erste Ventilsteuerkreisleitung 7a.3 wieder von der zweiten Ventilsteuerkreisleitung 7b.3 trennt.

Ein Lösen diese Zustands erfolgt durch entsprechende Ansteuerung des Verbindungsventils 7e und des Auslassventils 7a.1 des ersten Ventilsteuerkreises 7a, indem die zweite Ventilsteuerkreisleitung 7b.3 mit der ersten Ventilsteuerkreisleitung 7a.3 verbunden wird und diese weiter über das Auslassventil 7a.1 des ersten Ventilsteuerkreises 7a an dies Atmosphäre entlüftet wird.

Die hier gezeigten Ventile 7a.1, 7a.2, 7b.1, 7b.2 des ersten und zweiten Ventilsteuerkreises 7a, 7b sind als federrückgestellte Magnetventile ausgebildet. D.h. sie schalten bei fehlender Ansteuerung durch das erste und zweite Steuermittel 4a, 4b in die gezeigten Schaltstellungen zurück. Ihr Schaltzustand ohne Ansteuerung ist also der Schließzustand (sog. normally-closed-valves). Es sind jedoch auch Ausführungsformen denkbar in denen eines oder mehrere dieser Ventile ohne Ansteuerung in eine Öffnungsstellung wechseln (sog. normally-open-valves).

**Fig. 3** zeigt eine erfindungsgemäße Vorrichtung nach einer dritten Ausführungsform, bei der das Auslassventil 7a.2 des ersten Ventilsteuerkreises 7a als normally-open-valve ausgebildet ist. In diesem Fall ist die erste Ventilsteuerkreisleitung 7a.3 dauerhaft entlüftet und muss durch aktives Schalten des Auslassventils 7a.2 gegen die Atmosphäre abgeschlossen werden, um sie über das Einlassventil 7a.1 befüllen zu können.

### BEZUGSZEICHENLISTE

- 1: Vorrichtung
- 2: Bremssystem
- 3: Steuereingang
- 4: Steuereinheit
- 4a: erstes Steuermittel
- 4b: zweites Steuermittel
- 5: Druckquelle
- 6: Auslassanschluss
- 7: Ventileinheit
- 7a: erster Ventilsteuerkreis
- 7a.1: Einlassventil
- 7a.2: Auslassventil
- 7a.3: erste Ventilsteuerkreisleitung
- 7b: zweiter Ventilsteuerkreis
- 7b.1: Einlassventil
- 7b.2: Auslassventil
- 7b.3: zweite Ventilsteuerkreisleitung
- 7c: Steuerventil
- 7c.1: erster Steuereingang
- 7c.2: zweiter Steuereingang
- 7d: Nachspeiseventil
- 7d.1: Nachspeisesteuereingang
- 7e: Verbindungsventil
- 8: Gehäuse
- 9: Versorgungsanschluss
- 10: Versorgungsleitung
- 11: Entlüftungsanschluss
- 12a: erster Drucksensor
- 12b: zweiter Drucksensor

## Patentansprüche

1. Vorrichtung (1) zur Erzeugung eines fluidischen Bremssteuersignals für ein fluidisches Bremssystem (2) eines ersten Fahrzeugs, aufweisend:
- einen Steuereingang (3), der zum Empfang eines Bremsanforderungssignals ausgebildet ist;
- eine Steuereinheit (4), die zur Verarbeitung des Bremsanforderungssignals ausgebildet ist;
- eine Druckquelle (5), die zur Bereitstellung eines Versorgungsdrucks ausgebildet ist;
- einen Auslassanschluss (6), der dazu ausgebildet ist, das fluidische Bremssteuersignal in das Bremssystem (2) auszugeben; und
- eine Ventileinheit (7), die dazu ausgebildet ist, von der Steuereinheit (4) entsprechend dem Bremsanforderungssignal angesteuert zu werden und entsprechend der Ansteuerung durch die Steuereinheit (4) das fluidische Bremssteuersignal auf Basis des Versorgungsdrucks zu erzeugen und an den Auslassanschluss (6) zu übertragen,
**dadurch gekennzeichnet, dass**
die Ventileinheit (7) einen ersten Ventilsteuerkreis (7a) und einen zweiten Ventilsteuerkreis (7b) aufweist, und wobei
die Vorrichtung (1) dazu ausgebildet ist, das fluidische Bremssteuersignal direkt durch den ersten Ventilsteuerkreis (7a) und/oder den zweiten Ventilsteuerkreis (7b) zu erzeugen, oder
wobei der erste Ventilsteuerkreis (7a) und der zweite Ventilsteuerkreis (7b) dazu ausgebildet sind, ein fluidisches Vorrichtungssteuersignal zu erzeugen, und die Vorrichtung (1) dazu ausgebildet ist, das fluidische Bremssteuersignal in Reaktion auf das fluidische Vorrichtungssteuersignal zu erzeugen.

2. Vorrichtung (1) nach Anspruch 1, wobei
die Ventileinheit (7) wenn der erste Ventilsteuerkreis (7a) und der zweite Ventilsteuerkreis (7b) dazu ausgebildet sind, ein fluidisches Vorrichtungssteuersignal zu erzeugen, ein druckbetätigtes Steuerventil (7c) aufweist, wobei das Steuerventil (7c) dazu ausgebildet ist, in Reaktion auf das fluidische Vorrichtungssteuersignal das fluidische Bremssteuersignals zu erzeugen, wobei das Steuerventil (7c) vorzugsweise ein Relaisventil aufweist.

3. Vorrichtung (1) nach einem der vorstehenden Ansprüche, wobei
die Ventileinheit (7) mindestens ein elektrisch betätigbares Ventil (7a.1, 7a.2, 7b.1, 7b.2) aufweist, das durch die Steuereinheit (4) ansteuerbar vorgesehen ist.

4. Vorrichtung (1) nach einem der vorstehenden Ansprüche, wobei
die Ventileinheit (7) dazu ausgebildet ist, das fluidische Bremssteuersignal so zu erzeugen, dass eine situationsabhängige Aktivierung des Bremssystems (2) durch das fluidische Bremssteuersignal verursacht wird, insbesondere um das Fahrzeug im Fahrbetrieb abzubremsen, und/oder wobei
die Ventileinheit (7) dazu ausgebildet ist, das fluidische Bremssteuersignal so zu erzeugen, dass eine dauerhafte Aktivierung des Bremssystems (2) durch das fluidische Bremssteuersignal verursacht wird, insbesondere um das Fahrzeug im Stillstand zu halten.

5. Vorrichtung (1) nach einem der vorstehenden Ansprüche, wobei
der erste Ventilsteuerkreis (7a) dazu ausgebildet ist, wenn der erste Ventilsteuerkreis (7a) und der zweite Ventilsteuerkreis (7b) dazu ausgebildet sind, ein fluidisches Vorrichtungssteuersignal zu erzeugen, ein fluidisches Vorrichtungssteuersignal so zu erzeugen, dass eine situationsabhängige Aktivierung des Bremssystems (2) durch das fluidische Bremssteuersignal verursacht wird, insbesondere um das Fahrzeug im Fahrbetrieb abzubremsen, und/oder wobei
der zweite Ventilsteuerkreis (7b) dazu ausgebildet ist, wenn der erste Ventilsteuerkreis (7a) und der zweite Ventilsteuerkreis (7b) dazu ausgebildet sind, ein fluidisches Vorrichtungssteuersignal zu erzeugen, ein fluidisches Vorrichtungssteuersignal so zu erzeugen, dass eine dauerhafte Aktivierung des Bremssystems (2) durch das fluidische Bremssteuersignal verursacht wird, insbesondere um das Fahrzeug im Stillstand zu halten.

6. Vorrichtung (1) nach Anspruch 4 oder 5, aufweisend
ein Nachspeiseventil (7d), das dazu ausgebildet ist, insbesondere bei dauerhafter Aktivierung des Bremssystems (2), Druck für das fluidische Bremssteuersignal nachzuspeisen und/oder Druck für das Vorrichtungssteuersignal nachzuspeisen, wenn die Vorrichtung (1) den ersten Ventilsteuerkreis (7a) und den zweiten Ventilsteuerkreis (7b) aufweist, und/oder das dazu ausgebildet ist, insbesondere bei keiner Aktivierung des Bremssystems (2), Druck für das fluidische Bremssteuersignal abzulassen und/oder Druck für das Vorrichtungssteuersignal abzulassen, wenn die Vorrichtung (1) den ersten Ventilsteuerkreis (7a) und den zweiten Ventilsteuerkreis (7b) aufweist

7. Vorrichtung (1) nach einem der vorstehenden Ansprüche, wobei
die Steuereinheit (4) ein erstes Steuermittel (4a) und ein zweites Steuermittel (4b) aufweist, wobei die Steuermittel (4a, 4b) vorzugsweise redundant ausgebildet sind.

8. Vorrichtung (1) nach Anspruch 7, wobei
wenn die Ventileinheit (7) einen ersten Ventilsteuerkreis (7a) und einen zweiten Ventilsteuerkreis (7b) aufweist, das erste Steuermittel (4a) zur Steuerung des ersten Ventilsteuerkreises (7a) ausgebildet ist und das zweite Steuermittel (7b) zur Steuerung des zweiten Ventilsteuerkreises (7b) ausgebildet ist.

9. Vorrichtung (1) nach einem der vorstehenden Ansprüche, aufweisend
ein Verbindungsventil (7e), das dazu ausgebildet ist, den ersten Ventilsteuerkreis (7a) und den zweiten Ventilsteuerkreis (7b) miteinander zu verbinden und voneinander zu trennen, wobei das Verbindungsventil (7e) vorzugsweise durch die Steuereinheit (4) steuerbar ist, wobei vorzugsweise bei einer Verbindung des ersten Ventilsteuerkreises (7a) über das Verbindungsventil (7e) mit dem zweiten Ventilsteuerkreis (7b) eine Erzeugung des fluidischen Vorrichtungssteuersignals im ersten Ventilsteuerkreis (7a) durch den zweiten Ventilsteuerkreis (7b) und/oder eine Erzeugung des fluidischen Vorrichtungssteuersignals im zweiten Ventilsteuerkreis (7b) durch den ersten Ventilsteuerkreis (7a) durchgeführt wird.

10. Vorrichtung (1) nach einem der vorstehenden Ansprüche, wobei
das Bremsanforderungssignal ausschließlich mindestens ein elektrisches oder elektronisches Signal aufweist und/oder wobei
die Vorrichtung (1) als Steuereingang ausschließlich den Steuereingang (3) aufweist.

11. Vorrichtung (1) nach einem der vorstehenden Ansprüche, wobei
die Vorrichtung (1) modular ausgebildet ist und/oder ein Gehäuse oder ein Trägerelement aufweist, das als Elemente den Steuereingang (3), die Steuereinheit (4), die Druckquelle (5), den Auslassanschluss (6) und die Ventileinheit (7) aufweist, und/oder wobei
die Vorrichtung (1) dazu ausgebildet ist, in oder an einem zweiten Fahrzeug angebracht zu werden, wobei das zweite Fahrzeug mit dem ersten Fahrzeug gekoppelt ist.

12. Bremssystem für ein Fahrzeug aufweisend eine Vorrichtung (1) nach einem der Ansprüche 1 bis 11.

13. Fahrzeug aufweisend eine Vorrichtung (1) nach einem der Ansprüche 1 bis 11 oder ein Bremssystem nach Anspruch 12.

14. Verfahren zur Erzeugung eines fluidischen Bremssteuersignals für ein fluidisches Bremssystem (2) eines ersten Fahrzeugs mit folgenden Schritten:
- Empfangen eines Bremsanforderungssignals;
- Erzeugen eines fluidischen Bremssteuersignals in Reaktion auf das Bremsanforderungssignal aus einem Versorgungsdruck durch eine Ventileinheit (7); und
- Ausgeben des fluidischen Bremssteuersignals, wobei
zur Durchführung des Verfahrens eine Vorrichtung (1) nach einem der Ansprüche 1 bis 11 verwendet wird.

## Claims

1. Device (1) for generating a fluidic brake control signal for a fluidic brake system (2) of a first vehicle, having:
- a control input (3) which is configured to receive a brake request signal;
- a control unit (4) which is configured to process the brake request signal;
- a pressure source (5) which is configured to provide a supply pressure;
- an outlet terminal (6) which is configured to output the fluidic brake control signal into the brake system (2); and
- a valve unit (7) which is configured to be controlled by the control unit (4) in accordance with the brake request signal and to generate and transmit the fluidic brake control signal to the outlet terminal (6) on the basis of the supply pressure in accordance with the control by the control unit (4)
**characterized in that**
the valve unit (7) has a first valve control circuit (7a) and a second valve control circuit (7b), and wherein
the device (1) is configured to generate the fluidic brake control signal directly by means of the first valve control circuit (7a) and/or the second valve control circuit (7b), or
wherein the first valve control circuit (7a) and the second valve control circuit (7b) are configured to generate a fluidic device control signal, and the device (1) is configured to generate the fluidic brake control signal in response to the fluidic device control signal.

2. Device (1) according to claim 1, wherein
the valve unit (7), when the first valve control circuit (7a) and the second valve control circuit (7b) are configured to generate a fluidic device control signal, has a pressure-activated control valve (7c), wherein the control valve (7c) is configured to generate the fluidic brake control signal in response to the fluidic device control signal, wherein the control valve (7c) preferably has a relay valve.

3. Device (1) according to either of the preceding claims, wherein
the valve unit (7) has at least one electrically actuatable valve (7a.1, 7a.2, 7b.1, 7b.2) which is provided to be controllable by the control unit (4).

4. Device (1) according to any one of the preceding claims, wherein
the valve unit (7) is configured to generate the fluidic brake control signal such that a situation-dependent activation of the brake system (2) is caused by the fluidic brake control signal, in particular in order to brake the vehicle during driving operation, and/or wherein
the valve unit (7) is configured to generate the fluidic brake control signal such that a permanent activation of the brake system (2) is caused by the fluidic brake control signal, in particular in order to keep the vehicle at a standstill.

5. Device (1) according to any one of the preceding claims, wherein
the first valve control circuit (7a) is configured, when the first valve control circuit (7a) and the second valve control circuit (7b) are configured to generate a fluidic device control signal, to generate a fluidic device control signal such that a situation-dependent activation of the brake system (2) is caused by the fluidic brake control signal, in particular in order to brake the vehicle during driving operation, and/or wherein
the second valve control circuit (7b) is configured, when the first valve control circuit (7a) and the second valve control circuit (7b) are configured to generate a fluidic device control signal, to generate a fluidic device control signal such that a permanent activation of the brake system (2) is caused by the fluidic brake control system, in particular in order to keep the vehicle at a standstill.

6. Device (1) according to claim 4 or 5, having
a replenishment valve (7d) configured, upon permanent activation of the brake system (2), to replenish pressure for the fluidic brake control signal and/or to replenish pressure for the device control signal when the device (1) has the first valve control circuit (7a) and the second valve control circuit (7b), and/or configured, in particular with no activation of the brake system (2), to release pressure for the fluidic brake control signal and/or to release pressure for the device control signal when the device (1) has the first valve control circuit (7a) and the second valve control circuit (7b).

7. Device (1) according to any one of the preceding claims, wherein
the control unit (4) has a first control means (4a) and a second control means (4b), wherein the control means (4a, 4b) are preferably configured to be redundant.

8. Device (1) according to claim 7, wherein,
if the valve unit (7) has a first valve control circuit (7a) and a second valve control circuit (7b), the first control means (4a) is configured to control the first valve control circuit (7a) and the second control means (7b) is configured to control the second valve control circuit (7b).

9. Device (1) according to any one of the preceding claims, having
a connecting valve (7e) configured to connect the first valve control circuit (7a) and the second valve control circuit (7b) to each other and to separate them from each other, wherein the connecting valve (7e) is preferably controllable by the control unit (4), wherein preferably, in the case of a connection of the first valve control circuit (7a) via the connecting valve (7e) to the second valve control circuit (7b), a generation of the fluidic device control signal in the first valve control circuit (7a) is performed by the second valve control circuit (7b) and/or a generation of the fluidic device control signal in the second valve control circuit (7b) is performed by the first valve control circuit (7a).

10. Device (1) according to any one of the preceding claims, wherein
the brake request signal exclusively has at least one electrical or electronic signal, and/or wherein
the device (1) has exclusively the control input (3) as the control input.

11. Device (1) according to any one of the preceding claims, wherein
the device (1) is configured to be modular and/or has a housing or a carrier element which has the control input (3), the control unit (4), the pressure source (5), the outlet terminal (6) and the valve unit (7) as elements, and/or wherein
the device (1) is configured to be attached in or on a second vehicle, wherein the second vehicle is coupled to the first vehicle.

12. Brake system for a vehicle, having a device (1) according to any one of claims 1 to 11.

13. Vehicle having a device (1) according to any one of claims 1 to 11 or a brake system according to claim 12.

14. Method for generating a fluidic brake control signal for a fluidic brake system (2) of a first vehicle, having the following steps:
- receiving a brake request signal;
- generating a fluidic brake control signal in response to the brake request signal from a supply pressure by a valve unit (7); and
- outputting the fluidic brake control signal, wherein
in order to perform the method a device (1) according to any one of claims 1 to 11 is used.

## Revendications

1. Dispositif (1) destiné à la génération d'un signal de commande de freinage fluidique pour un système de freinage fluidique (2) d'un premier véhicule, présentant :
- une entrée de commande (3) qui est réalisée pour la réception d'un signal de demande de freinage ;
- un dispositif de commande (4) qui est réalisé pour le traitement du signal de demande de freinage ;
- une source de pression (5) qui est réalisée pour la fourniture d'une pression d'alimentation ;
- un raccord de sortie (6) qui est réalisé pour transmettre le signal de commande de freinage fluidique au système de freinage (2) ; et
- une unité de soupape (7) qui est réalisée pour être commandée par le dispositif de commande (4) conformément au signal de demande de freinage et pour générer le signal de commande de freinage fluidique conformément à la commande par le biais du dispositif de commande (4) sur la base de la pression d'alimentation et pour le transférer au raccord de sortie (6),
**caractérisé en ce que**
l'unité de soupape (7) présente un premier circuit de commande de soupape (7a) et un second circuit de commande de soupape (7b), et dans lequel
le dispositif (1) est réalisé pour générer le signal de commande de freinage fluidique directement par le biais du premier circuit de commande de soupape (7a) et/ou du second circuit de commande de soupape (7b), ou
dans lequel le premier circuit de commande de soupape (7a) et le second circuit de commande de soupape (7b) sont réalisés pour générer un signal de commande de dispositif fluidique et le dispositif (1) est réalisé pour générer le signal de commande de freinage fluidique en réaction au signal de commande de dispositif fluidique.

2. Dispositif (1) selon la revendication 1, dans lequel
l'unité de soupape (7), lorsque le premier circuit de commande de soupape (7a) et le second circuit de commande de soupape (7b) sont réalisés pour générer un signal de commande de dispositif fluidique, présente une soupape de commande (7c) actionnée par pression, dans lequel la soupape de commande (7c) est réalisée pour générer le signal de commande de freinage fluidique en réaction au signal de commande de dispositif fluidique, dans lequel la soupape de commande (7c) présente de préférence une soupape relais.

3. Dispositif (1) selon l'une quelconque des revendications précédentes, dans lequel
l'unité de soupape (7) présente au moins une soupape actionnable électriquement (7a.1, 7a.2, 7b.1, 7b.2) qui est prévue pour être commandée par le biais du dispositif de commande (4).

4. Dispositif (1) selon l'une quelconque des revendications précédentes, dans lequel
l'unité de soupape (7) est réalisée pour générer le signal de commande de freinage fluidique, de sorte qu'une activation du système de freinage (2) dépendante de la situation est provoquée par le signal de commande de freinage fluidique, en particulier pour freiner le véhicule lors d'une opération de conduite et/ou dans lequel
l'unité de soupape (7) est réalisée pour générer le signal de commande de freinage fluidique, de sorte qu'une activation durable du système de freinage (2) est provoquée par le signal de commande de freinage fluidique, en particulier pour maintenir le véhicule à l'arrêt.

5. Dispositif (1) selon l'une quelconque des revendications précédentes, dans lequel
le premier circuit de commande de soupape (7a), lorsque le premier circuit de commande de soupape (7a) et le second circuit de commande de soupape (7b) sont réalisés pour générer un signal de commande de dispositif fluidique, est réalisé pour générer un signal de commande de dispositif fluidique, de sorte qu'une activation du système de freinage (2) dépendante de la situation est provoquée par le signal de commande de freinage fluidique, en particulier pour freiner le véhicule lors d'une opération de conduite, et/ou dans lequel
le second circuit de commande de soupape (7b), lorsque le premier circuit de commande de soupape (7a) et le second circuit de commande de soupape (7b) sont réalisés pour générer un signal de commande de dispositif fluidique, est réalisé pour générer un signal de commande de dispositif fluidique, de sorte qu'une activation durable du système de freinage (2) est provoquée par le signal de commande de freinage fluidique, en particulier pour maintenir le véhicule à l'arrêt.

6. Dispositif (1) selon la revendication 4 ou 5, présentant
une soupape de réalimentation (7d) qui est réalisée pour, en particulier lors d'une activation durable du système de freinage (2), réalimenter en pression le signal de commande de freinage fluidique et/ou alimenter en pression le signal de commande de dispositif lorsque le dispositif (1) présente le premier circuit de commande de soupape (7a) et le second circuit de commande de soupape (7b) et/ou qui est réalisée, en particulier en l'absence d'activation du système de freinage (2), pour relâcher la pression pour le signal de commande de freinage fluidique et/ou relâcher la pression pour le signal de commande de dispositif lorsque le dispositif (1) présente le premier circuit de commande de soupape (7a) et le second circuit de commande de soupape (7b).

7. Dispositif (1) selon l'une quelconque des revendications précédentes, dans lequel
le dispositif de commande (4) présente un premier moyen de commande (4a) et un second moyen de commande (4b), dans lequel le moyens de commande (4a, 4b) sont réalisés de préférence de manière redondante.

8. Dispositif (1) selon la revendication 7, dans lequel
lorsque l'unité de soupape (7) présente un premier circuit de commande de soupape (7a) et un second circuit de commande de soupape (7b), le premier moyen de commande (4a) est réalisé pour la commande du premier circuit de commande de soupape (7a) et le second moyen de commande (7b) est réalisé pour la commande du second circuit de commande de soupape (7b).

9. Dispositif (1) selon l'une quelconque des revendications précédentes, présentant
une soupape de raccordement (7e) qui est réalisée pour relier l'un à l'autre le premier circuit de commande de soupape (7a) et le second circuit de commande de soupape (7b) et les séparer l'un de l'autre, dans lequel la soupape de raccordement (7e) peut être commandée de préférence par le dispositif de commande (4), dans lequel de préférence lors d'un raccordement du premier circuit de commande de soupape (7a) via la soupape de raccordement (7e) au second circuit de commande de soupape (7b) une génération du signal de commande de dispositif fluidique dans le premier circuit de commande de soupape (7a) par le biais du second circuit de commande (7b) et/ou une génération du signal de commande de dispositif fluidique dans le second circuit de commande de soupape (7b) sont effectuées par le biais du premier circuit de commande de soupape (7a).

10. Dispositif (1) selon l'une quelconque des revendications précédentes, dans lequel
le signal de demande de freinage présente exclusivement au moins un signal électrique ou électronique et/ou dans lequel
le dispositif (1) présente exclusivement l'entrée de commande (3) en tant qu'entrée de commande.

11. Dispositif (1) selon l'une quelconque des revendications précédentes, dans lequel
le dispositif (1) est réalisé de manière modulaire et/ou présente un boîtier ou un élément de support qui présente l'entrée de commande (3), le dispositif de commande (4), la source de pression (5), le raccord de sortie (6) et l'unité de soupape (7) en tant qu'éléments et/ou dans lequel
le dispositif (1) est réalisé pour être installé au niveau d'un second véhicule, dans lequel le second véhicule est couplé au premier véhicule.

12. Système de freinage pour un véhicule présentant un dispositif (1) selon l'une quelconque des revendications 1 à 11.

13. Véhicule présentant un dispositif (1) selon l'une quelconque des revendications 1 à 11 ou un système de freinage selon la revendication 12.

14. Procédé destiné à la génération d'un signal de commande de freinage fluidique pour un système de freinage fluidique (2) d'un premier véhicule, avec les étapes suivantes :
- réception d'un signal de demande de freinage ;
- génération d'un signal de commande de freinage fluidique en réaction au signal de demande de freinage à partir d'une pression d'alimentation par le biais d'une unité de soupape (7) ; et
- émission du signal de commande de freinage fluidique, dans lequel un dispositif (1) selon l'une quelconque des revendications 1 à 11 est utilisé pour la mise en œuvre du procédé.
